Europäisches Patentamt

European Patent Office

Office européen des brevets

(11) Veröffentlichungsnummer: **0 330 932**
**A2**

## (12) EUROPÄISCHE PATENTANMELDUNG

(21) Anmeldenummer: **89102738.5**

(22) Anmeldetag: **17.02.89**

(51) Int. Cl.⁴: **B29B 9/14 , B29B 9/06 , B29C 67/14 , //B29K105:12**

(30) Priorität: **02.03.88 DE 3806661**

(43) Veröffentlichungstag der Anmeldung:
**06.09.89 Patentblatt 89/36**

(84) Benannte Vertragsstaaten:
**AT BE CH DE ES FR GB GR IT LI NL SE**

(71) Anmelder: **KABELMETAL ELECTRO GMBH**
**Kabelkamp 20 Postfach 260**
**D-3000 Hannover 1(DE)**

(72) Erfinder: **Marx, Karl-Heinz**
**Zehntweg 25**
**D-3008 Garbsen 9(DE)**

(54) **Verfahren zur Herstellung von mit Kurzfasern verstärkten Gegenständen aus Kunststoff.**

(57) Es wird ein Verfahren zur Herstellung von mit Kurzfasern verstärkten Kunststoffgegenständen beschrieben, bei der zunächst Fasern von nahezu unbegrenzter Länge mit Kunststoff umspritzt, aus diesen umspritzten Fasern Granulat hergestellt und das Granulat zu dem faserverstärkten Kunststoffgegenstand verarbeitet wird.

EP 0 330 932 A2

Die Erfindung betrifft ein Verfahren zur Herstellung von mit Kurzfasern verstärkten Gegenständen aus Kunststoff, bei dem der Kunststoff gemeinsam mit den Kurzfasern durch Spritzgießen, Extrudieren etc. verarbeitet wird.

Um die mechanischen und auch physikalischen Eigenschaften von Kunststoffen zu verändern, ist es bekannt, diesen Zusatzstoffe beizumischen. So ist es z. B. bekannt, Kunststoffen Ruß beizugeben, um deren elektrische Leitfähigkeit zu verbessern. Um die mechanischen Eigenschaften von Kunststoffen zu verbessern, insbesondere die Zugfestigkeit zu erhöhen, hat man bereits Gewebe aus zugfestem Material im Wandungsaufbau eingelagert.

Weiterhin ist es bekannt, den zu verarbeitenden Kunststoffgranulat Kurzfasern zuzumischen. Dies führt jedoch zu einer ungleichmäßigen Verteilung der Kurzfasern in dem Extrudat. Dies gilt insbesondere für Kurzfasern, welche im Verhältnis zum Granulat ein geringes Volumen oder ein geringes Gewicht aufweisen. Es hat sich in Versuchen gezeigt, daß sich solche Kurzfasern beim vorhergehenden Aufmischen bzw. auch beim Einmischen in den Trichter des Extruders zu Knäueln vereinigen. Beim Extrudieren bleiben diese Knäuel weitestgehend erhalten und führen im Extrudat zu einer Materialanhäufung der Kurzfasern.

Der vorliegenden Erfindung liegt die Aufgabe zugrunde, ein Verfahren anzugeben, mit dem mit Kurzfasern verstärkte Kunststoffartikel hergestellt werden können, bei denen die Kurzfasern in gleichmäßiger Verteilung in dem Kunststoffartikel vorliegen.

Diese Aufgabe wird dadurch gelöst, daß man zunächst Fasern nahezu unbegrenzter Länge mit Kunststoff umspritzt, daß die mit Kunststoff umspritzten Fasern granuliert werden und daß das Granulat zu dem Gegenstand verarbeitet wird. Das Umspritzen der Fasern geschieht in einem kontinuierlichen Extrusionsprozeß wie bei der Umspritzung von elektrischen Leitern und kann mit Geschwindigkeiten von bis zu 1700 m/min vorgenommen werden. Das Granulieren kann im selben Arbeitsgang mit dem Umspritzen aber auch in einem gesonderten Arbeitsgang geschehen. Beim Verarbeiten des Granulates zu dem Gegenstand z. B. in einem Extruder wird das Granulat allmählich bis über die Schmelztemperatur des Kunststoffes erwärmt. Die im Kunststoff eingebetteten Kurzfasern verteilen sich erst, wenn ihre Kunststoffhülle aufgeschmolzen ist. Der Kunststoff liegt dann in flüssiger Form vor, in der sich die in fester Form vorliegenden Kurzfasern gleichmäßig verteilen lassen.

Um die Wirtschaftlichkeit des Umspritzverfahrens noch zu erhöhen, hat es sich als vorteilhaft erwiesen, eine Vielzahl von Fasern gleichzeitig zu umspritzen. Dabei können die Fasern während des Extrusionsprozesses so geführt werden, daß sie in Abstand zueinander gleichmäßig im Querschnitt des Granulats angeordnet sind. Es besteht jedoch auch die Möglichkeit, die einzelnen Fasern vor dem Extrudieren zu bündeln. Das Faserbündel kann nach einem weiteren Gedanken der Erfindung auch aus verseilten oder verzwirnten Fasern bestehen. Das hat den Vorteil, daß im Gegensatz zu einer gestreckten Anordnung der Fasern, eine größere Faserlänge in dem Extrudat bzw. Granulat untergebracht werden kann.

Als Werkstoff für die Fasern hat sich Baumwolle als geeignet erwiesen, welche sich durch eine hohe Zugfestigkeit auszeichnet, die auch bei Temperaturen erhalten bleibt, bei denen der Kunststoff weich wird. Anstelle des Werkstoffes Baumwolle sind jedoch auch Fasern aus hochfestem Kunststoff denkbar wie z. B. Polyester, Polyaramide u. ä., die bei der Erweichungstemperatur von z. B. Polyethylen noch hohe Festigkeitswerte aufweisen. Auch kann es für manche Anwendungsfälle von Vorteil sein, Fasern aus Kohlenstoff, Glas, Mineral etc. zu verwenden.

Die Fasern weisen zweckmäßigerweise einen Durchmesser von 0,01 bis 0,05 mm auf. Das Optimum der Länge der Fasern im Granulat und damit im hergestellten Kunststoffgegenstand liegt zwischen 5 und 30 mm. Der Durchmesser der umspritzten Fasern, d.h. der Durchmesser des aus dem Mundstück des Extruders austretenden Stranges liegt vorteilhafterweise zwischen 2 und 5 mm.

Für die Herstellung von Granulat, in dem die Fasern im Querschnitt gesehen gleichmäßig verteilt angeordnet sind, hat es sich als vorteilhaft erwiesen, die Fasern vor dem Spritzwerkzeug durch eine Lochscheibe zu führen und in Abstand zueinander zu halten und beim Umspritzen den Zwischenraum zwischen den Fasern mit Kunststoff auszufüllen. Der Füllfaktor, d. h. das Verhältnis, in dem die Kurzfasern und der Kunststoff bezüglich ihres Volumens zueinander in dem hergestellten Gegenstand vorliegen, wird bestimmt durch den Füllfaktor im Granulat. Es besteht jedoch die Möglichkeit, den Füllfaktor für die Fasern zu verringern, in dem man dem Granulat aus Fasern und Kunststoff solches aus reinem Kunststoff beimischt.

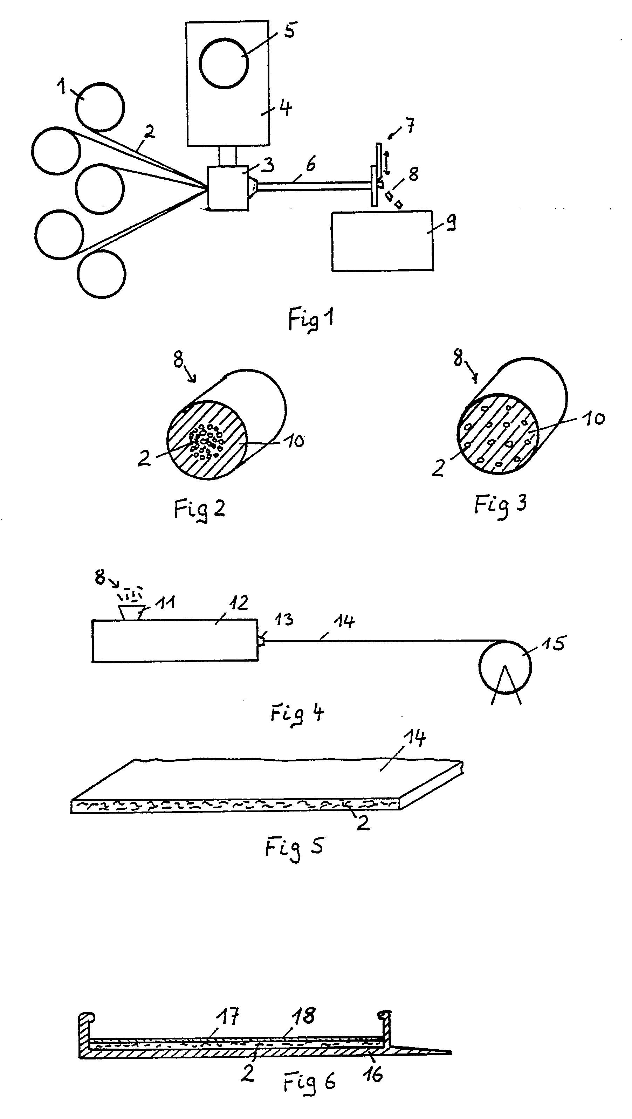

Die Erfindung ist an Hand der in den Figuren 1 bis 6 schematisch dargestellten Ausführungsbeispiele näher erläutert.

In der Figur 1 sind mit 1 Vorratsspulen für Fasern 2 bezeichnet, die in nicht dargestellter Weise abgezogen und dem Spritzkopf 3 eines Extruders 4 mit einer Einfüllöffnung 5 für Kunststoffgranulat zugeführt werden. In dem Spritzkopf 3 werden die Fasern 2 mit Kunststoff umhüllt. Der aus dem Spritzkopf 3 austretende umhüllte Strang 6 wird in nicht dargestellter Weise abgekühlt und einer Granuliervorrichtung 7 zugeführt, in der der Strang 6 zu Granulat 8 zerkleinert wird, welches in einem Vorratsbehälter 9 gesammelt wird.

Die Fasern 2 können Einzelfasern oder aber aus Einzelfasern gebildete Faserbündel oder Fäden sein, die verseilt oder verzwirnt sein können. Die Fasern oder Fäden 2 können miteinander zu einem Strang verseilt oder verzwirnt werden. Der Durchmesser der einzelnen Fasern 2 sollte zwischen 0,01 und 0,05 mm liegen. Der Strang 6 hat vorteilhafterweise einen Durchmesser von 3 bis 4 mm. Die Länge des Granulats 8 beträgt vorzugsweise 10 bis 20 mm.

Als Material für die Fasern 2 wird Baumwolle bevorzugt. Dieser Werkstoff zeigt bei der Erweichungstemperatur des Kunststoffes noch keine Abnahme seiner Festigkeit und kann somit als Verstärkungseinlage bei erhöhter Temperatur in einem Kunststoffgegenstand wirken. Jedoch sind auch andere Werkstoffe denkbar wie z. B. Polyester, Polyamid, Polyaramid, Mineralfasern, Glasfiber, Kohlenstoffasern, Metallfasern, vernetzte Polymere etc..

Die Figuren 2 und 3 zeigen Granulatkörper 8 in perspektivischer Ansicht, wobei in Figur 2 die Fasern 2 als Bündel vorliegen, welches von einer Kunststoffhülle 10 umgeben ist.

Die Figur 3 zeigt einzelne Fasern oder Fäden 2, die gleichmäßig verteilt in dem Kunststoffmaterial 10 angeordnet sind. Eine solche Anordnung läßt sich dadurch herstellen, daß die Fasern oder Fäden 2 vor dem Spritzkopf 3 eine nicht dargestellte Lochscheibe durchlaufen.

Für die Fertigung des verstärkten Kunststoffgegenstandes wird das Granulat 8 in den Trichter 11 eines Schneckenextruders 12 eingefüllt - wie in Figur 4 dargestellt. Beim Durchgang durch den Extruder 12 wird das Granulat 8 teils durch eine nicht dargestellte Beheizung teils durch Scherkräfte aufgeheizt, bis der Kunststoff 10 in den geschmolzenen Zustand übergeht. In diesem Augenblick werden die eingebetteten Fasern 2 frei und verteilen sich gleichmäßig in der Kunststoffschmelze. Das aus dem Mundstück 13 beispielsweise austretende Band 14 kann auf eine Vorratsspule 15 aufgewickelt werden.

Die Figur 5 zeigt eine Teilansicht eines Bandes 14, in dessen Wandung die Kurzfasern 2 gleichmäßig verteilt angeordnet sind.

Das Kunststoffmaterial 10, aus dem das Granulat 8 bzw. das Band 14 hergestellt ist, kann jeder beliebige thermoplastische Kunststoff sein, wie z. B. Polyethylen. Nach der Fertigstellung des Bandes 14 kann dieses ggfs. auch vernetzt werden um seine Festigkeitswerte zu erhöhen. Auch besteht die Möglichkeit, den hergestellten verstärkten Kunststoffgegenstand nach dem Vernetzen aufzuweiten und somit wärmerückstellbar zu machen.

Das erfindungsgemäße Verfahren ist für die Herstellung von Gegenständen beliebiger Form geeignet. So ist es möglich, verstärkte Schläuche, zugfeste Kabelmäntel, Isolierungen von elektrischen Leitungen, Schrumpfartikel, verstärkende Beschichtungen für Gegenstände etc. herzustellen.

Ein besonders vorteilhaftes Anwendungsgebiet für das Verfahren nach der Lehre der Erfindung ist die Herstellung von Schrumpfmanschetten. Dabei wird ein Band aus einer vernetzbaren Kunststoffmischung gemeinsam mit einer faserverstärkten Schicht und einer auf der faserverstärkten Schicht angeordneten thermoplastischen Kunststoffschicht durch Koextrusion hergestellt. Die vernetzbare Schicht wird dann vernetzt und der Gegenstand im erwärmten Zustand gereckt und im gereckten Zustand abgekühlt. Derartige Schrumpfmanschetten werden bevorzugt für die Isolierung von Verbindungsstellen elektrischer Kabel eingesetzt. Die Figur 6 zeigt eine solche Manschette im Schnitt, bei der die vernetzte Schicht mit 16, die mit Fasern 2 verstärkte thermoplastische Schicht mit 17 und die thermoplastische Deckschicht mit 18 bezeichnet ist. Durch einen solchen Aufbau wird die Reißfestigkeit einer Manschette wesentlich erhöht. Die Schichten 16, 17 und 18 werden mit besonderem Vorteil durch Koextrusion d. h. in einem gemeinsamen Extrusionsvorgang hergestellt.

**Ansprüche**

1. Verfahren zur Herstellung von mit Kurzfasern verstärkten Gegenständen aus Kunststoff, bei dem der Kunststoff gemeinsam mit den Kurzfasern durch Spritzgießen, Extrudieren etc. verarbeitet wird, dadurch gekennzeichnet, daß man zunächst Fasern nahezu unbegrenzter Länge mit Kunststoff umspritzt, daß die mit Kunststoff umspritzten Fasern granuliert werden, und daß das Granulat zu dem Gegenstand verarbeitet wird.

2. Verfahren nach Anspruch 1, dadurch gekennzeichnet, daß eine Vielzahl von Fasern gleichzeitig in einem Werkzeug umspritzt werden.

3. Verfahren nach Anspruch 1 oder 2, dadurch gekennzeichnet, daß die Fasern als Bündel umspritzt werden.

4. Verfahren nach Anspruch 3, dadurch gekennzeichnet, daß die Fasern als verseiltes oder verzwirntes Bündel umspritzt werden.

5. Verfahren nach Anspruch 1 oder einem der folgenden, dadurch gekennzeichnet, daß Fasern aus Baumwolle umspritzt werden.

6. Verfahren nach Anspruch 1 oder einem der folgenden, dadurch gekennzeichnet, daß Fasern aus hochfestem Kunststoff, wie z. B. Polyester, Polyaramid etc. umspritzt werden.

7. Verfahren nach Anspruch 1 oder einem der folgenden, dadurch gekennzeichnet, daß Fasern aus Kohlenstoff, Glas, Mineral etc. umspritzt werden.

8. Verfahren nach Anspruch 1 oder einem der folgenden, dadurch gekennzeichnet, daß Fasern mit einem Durchmesser von 0,01 - 0,05 mm umspritzt werden.

9. Verfahren nach Anspruch 1 oder einem der folgenden, dadurch gekennzeichnet, daß die umspritzten Fasern auf eine Länge von 5 - 30 mm granuliert werden, wobei der Durchmesser der umspritzten Fasern bzw. des Granulates zwischen 1 und 5 mm liegt.

10. Verfahren nach Anspruch 1 oder einem der folgenden, dadurch gekennzeichnet, daß man die Fasern vor dem Spritzwerkzeug durch eine Lochscheibe führt und in Abstand zueinander hält und daß beim Umspritzen der Fasern der Zwischenraum zwischen den Fasern mit Kunststoff ausgefüllt wird.

Fig 1

Fig 2

Fig 3

Fig 4

Fig 5

Fig 6